(19) Europäisches Patentamt
European Patent Office
Office européen des brevets

(11) Veröffentlichungsnummer : **0 101 962**
**B1**

(12) # EUROPÄISCHE PATENTSCHRIFT

(45) Veröffentlichungstag der Patentschrift : **19.10.88**

(51) Int. Cl.⁴ : **C 08 F 20/36**, C 08 G 18/83

(21) Anmeldenummer : **83107526.2**

(22) Anmeldetag : **30.07.83**

(54) **Polymerisate mit primären Aminogruppen, ihre Herstellung und Verwendung.**

(30) Priorität : **04.08.82 DE 3229047**

(43) Veröffentlichungstag der Anmeldung : **07.03.84 Patentblatt 84/10**

(45) Bekanntmachung des Hinweises auf die Patenterteilung : **19.10.88 Patentblatt 88/42**

(84) Benannte Vertragsstaaten : **AT BE CH DE FR GB IT LI NL SE**

(56) Entgegenhaltungen :
**AT-A- 357 768**
**FR-A- 2 184 925**
**US-A- 4 076 691**

(73) Patentinhaber : **HOECHST AKTIENGESELLSCHAFT**
**Postfach 80 03 20**
**D-6230 Frankfurt am Main 80 (DE)**

(72) Erfinder : **Plum, Helmut Dr.**
**Nibelungenstrasse 3**
**D-6204 Taunusstein (DE)**

**EP 0 101 962 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung bezieht sich auf neue Polymerisate, die primäre Aminogruppen enthalten, die Herstellung derartiger Verbindungen durch saure Hydrolyse von Isocyanatgruppen enthaltenden Polymerisaten sowie ihre Verwendung in fremdvernetzenden 2-Komponentenlacken.

Polymerisate mit primären Aminogruppen sind bekannt. Sie können durch Copolymerisation von Aminoalkylestern ungesättigter Carbonsäuren oder durch Hofmannschen Abbau von Polyacrylamid hergestellt werden. Die Aminoalkylester ungesättigter Carbonsäuren sind jedoch nicht leicht zugänglich ; beim Hofmannschen Abbau erhält das Endprodukt nur in untergeordnetem Maße Aminogruppen.

In der DE-OS 29 48 419 ist die alkalische Hydrolyse von, endständige Isocyanatgruppen aufweisenden, Präpolymeren beschrieben. Es wird dort jedoch ausdrücklich darauf hingewiesen, daß die saure Hydrolyse mancher Isocyanate nur unvollständig verläuft, da das bei der Hydrolyse gebildete Amin mit noch nicht umgesetztem Isocyanat zum entsprechenden Harnstoff weiterreagiert, und daß sich durch Anwendung überschüssiger starker Mineralsäure diese Folgereaktion nicht unterdrücken läßt.

Der vorliegenden Erfindung liegt die Aufgabe zugrunde, die bestehenden Schwierigkeiten zu umgehen und solche Polymerisate mit primären Aminogruppen zu finden, die einfach herzustellen sind.

Gegenstand der Erfindung sind Polymerisate mit endständigen Aminogruppen, die Einheiten der Formel (I)

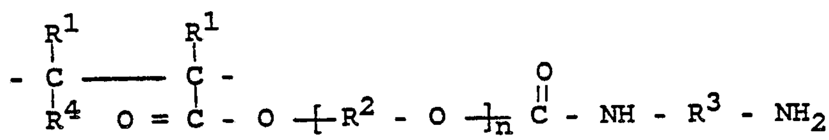

(I)

enthalten, in der bedeuten

$R^1$ Wasserstoff oder Methyl,

$R^2$ einen aliphatischen Rest mit 2 bis 10 C-Atomen, der bis zu zwei Sauerstoff-Ätherbrücken in der Kette enthalten kann,

$R^3$ einen aliphatischen Rest mit 3 bis 19 C-Atomen, einen cycloaliphatischen Rest mit 4 bis 15 C-Atomen oder einen aromatischen Rest mit 6 bis 13 C-Atomen,

$R^4$ Wasserstoff, Carboxyl, oder den Rest

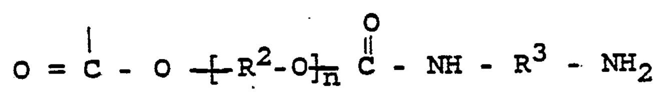

(II)

und

$n = 1$ bis 10,

wobei die beiden $R^1$ gleich oder verschieden sind.

$R^3$ is vorzugsweise ein Kohlenwasserstoffrest.

Gegenstand der Erfindung ist außerdem ein Verfahren zur Herstellung der Polymerisate durch Hydrolyse von Isocyanaten, indem man

a) in einem ersten Schritt einen hydroxylgruppenhaltigen Ester aus einer α,β-olefinisch ungesättigten Mono- oder Dicarbonsäure und einem zweiwertigen Alkohol mit einem Diisocyanat umsetzt, wobei das Äquivalentverhältnis von NCO- zu OH-Gruppen größer als 1 : 1 ist,

b) das Umsetzungsprodukt für sich oder im Gemisch mit mindestens einem olefinisch ungesättigten, polymerisierbaren Monomeren radikalisch polymerisiert,

c) das Polymerisat mit überschüssiger Mineralsäure und Wasser unter Abspaltung von Kohlendioxid in das Ammoniumsalz überführt und das erhaltene Produkt anschließend durch Basenzusatz neutralisiert.

Überraschend ist der glatte Verlauf der erfindungsgemäßen Reaktion, bei der ohne Bildung von Polyharnstoffen die gewünschten Polymerisate mit Primären Aminogruppen erhalten werden. Gegenüber der alkalischen Hydrolyse besitzt das erfindungsgemäße Verfahren den Vorteil, daß man auf einen Reaktionsschritt verzichten kann ; dadurch wird nicht nur der Arbeitsaufwand verringert, sondern auch die anfallende Salzmenge um 50 % reduziert.

Im ersten Reaktionsschritt a) werden die hydroxylfunktionellen Ester mit dem Diisocyanat in üblicher Weise in Lösung oder ohne Lösungsmittel umgesetzt. Das Äquivalentverhältnis von NCO- zu OH-Gruppen ist vorzugsweise 1,5-2,5 : 1, insbesondere 2 : 1. Wenn das Äquivalentverhältnis mindestens 2 : 1 ist, werden Verbindung gebildet, die wiederkehrende Einheiten der Formel (I) enthalten.

Die Reaktion kann in Abwesenheit, vorteilhaft aber in Gegenwart eines der üblichen Katalysatoren, z. B. aus der Gruppe der Amine oder Zinnverbindungen durchgeführt werden. Vorteilhaft werden die Zinnkatalysatoren in einer Menge von 0,001 bis 0,01, vorzugsweise 0,002 bis 0,005 Gew.-% Zinn und die Amine in einer Menge von 0,1 bis 1, vorzugsweise 0,25 bis 0,6 Gew.-%, jeweils bezogen auf die Menge der eingesetzten Ester und Diisocyanate, eingesetzt. Die Reaktion wird zweckmäßig im Temperaturbereich

von 0 bis 90 °C, vorzugsweise 10 bis 50 °C und insbesondere von 20 bis 30 °C durchgeführt.

Als organische Zinnverbindungen kommen z. B. Dibutylzinndilaurat, -acetat, -versatat oder Zinnoctoat, als Amine tertiäre Amine wie das cyclische Triäthylendiamin, Triäthylamin oder N,N-Diäthyläthanolamin in Frage.

Geeignete Carbonsäuren für die im ersten Reaktionsschritt eingesetzten hydroxylgruppenhaltigen Carbonsäureester sind z. B. Acrylsäure, Crotonsäure, Maleinsäure, Fumarsäure und/oder ihre möglichen Anhydride. Die für die Esterherstellung eingesetzten zweiwertigen Alkohole sind beispielsweise Äthylenglykol, die verschiedenen Propan-, Butan- oder Hexandiole, Diäthylenglykol, Triäthylenglykol, Neopentylglykol und andere, einzeln oder im Gemisch. Weitere geeignete hydroxylgruppenhaltige Carbonsäureester sind die Umsetzungsprodukte von α,β-olefinisch ungesättigten Monocarbonsäuren mit Epoxydverbindungen wie Äthylen-, Propylen- oder Butylenoxyd, Glycid und Glycidylester von Alkanmonocarbonsäuren. Es können auch die Monoester der obengenannten zweiwertigen ungesättigten Säuren eingesetzt werden.

Als Diisocyanate können vorzugsweise die bekannten aliphatischen, cycloaliphatischen oder aromatischen Isocyanate eingesetzt werden, z. B. 1,3-Trimethylen-, 1,4-Tetramethylen-, 1,5-Pentamethylen- und 1,6-Hexamethylendiisocyanat, 2,2,4-Trimethyl- und 2,4,4-Trimethyl-1,6-diisocyanato-hexan, Dodeca- und Nonadecamethylendiisocyanat, 1,2-Diisocyanatocyclobutan, Dicyclohexyl-4,4'-diisocyanat und Dicyclohexyl-methan-4,4'-diisocyanat, Cyclohexylphenylmethan-4,4'-diisocyanat, m- und p-Xylylendiisocyanat, 2,4- und 2,6-Toluylendiisocyanat, 4,4'-Diphenylmethandiisocyanat, 1-Methyl-2,4- und 1-Methyl-2,6-diisocyanatocyclohexan, 1-Isocyanato-3,3,5-trimethyl-5-isocyanatomethyl-cyclohexan (Isophorondiisocyanat), Bis(3-Methyl-4-isocyanatocyclohexyl)-methan und 2,2-Bis(4'-isocyanato-cyclohexyl)-propan. Bevorzugt werden Diisocyanate eingesetzt, deren NCO-Gruppen unterschiedliche Reaktivität aufweisen, z. B. 2,4-Toluylendiisocyanat und Isophorondiisocyanat.

Die Reaktionsprodukte, die je nach Herstellungsbedingungen nicht umgesetztes Diisocyanat und/oder Diurethane enthalten können, werden als solche oder nach Reinigung durch Extraktion oder Destillation verwendet. Verbindungen, die frei sind von den Ausgangsmaterialien, werden bevorzugt eingesetzt.

Im zweiten Reaktionsschritt b) erfolgt die radikalische Polymerisation der Reaktionsprodukte aus a) nach den in der Technik üblichen Methoden. Wird in Lösung polymerisiert, so können die üblicherweise für Acrylatharze geeigneten organischen Lösungsmittel, wie aromatische Kohlenwasserstoffe, z. B. Toluol oder Xylol, Äther, wie Dioxan oder Äthylenglykoldimethyläther, Ester, wie Essigsäureäthylester oder Äthylenglykolmonoäthylätheracetat, jedoch keine Alkohole verwendet werden.

Als Initiatoren für die radikalische Polymerisation dienen üblicherweise Peroxyverbindungen, wie Peroxide, Percarbonate, Perester, oder auch Azocarbonsäureamide oder -nitrile einzeln oder im Gemisch, im allgemeinen in Mengen von 0,5-5, vorzugsweise 1-2 Gew.-%. Als Molekulargewichtsregler können die üblichen Schwefelverbindungen, vorteilhaft in den gleichen Gewichtsmengen, verwendet werden, wie Mercaptoäthanol oder t-Dodecylmercaptan, aber z. B. auch dimeres α-Methylstyrol.

Als Comonomere für die Polymerisation b) können wenigstens eine α,β-olefinisch ungesättigte Gruppe tragende Verbindungen eingesetzt werden, die keine gegenüber Isocyanatgruppen reaktiv wirkende Wasserstoffatome enthalten. Beispiele dafür sind: α-Olefine wie Äthylen, Propylen u. ä., vinylaromatische Kohlenwasserstoffe wie Styrol, α-Methylstyrol oder die verschiedenen Vinyltoluole; Ester von α,β-olefinisch ungesättigten Carbonsäuren mit einwertigen aliphatischen Alkoholen, die 1 bis 18, vorzugsweise 1 bis 10 Kohlenstoffatome in der Alkylgruppe aufweisen, wie die Ester der Acryl- und Methacryl-, bzw. die Diester der Malein- oder Fumarsäure mit Methanol, Äthanol und den verschiedenen Propanolen, Butanolen, Octyl-, Nonyl- und Decylalkoholen.

Die radikalische Polymerisation kann in der Masse oder in Lösung ausgeführt werden. Sie wird zweckmäßig im Temperaturbereich von 70 bis 180, vorzugsweise von 80 bis 150, insbesondere von 105 bis 135 °C durchgeführt. Bei der Durchführung der Lösungsmittel-Polymerisation erfolgt diese z. B. durch kontinuierliche Zugabe der Monomeren, des Initiators und gegebenenfalls des Reglers in den Reaktor, der das Lösungsmittel enthält.

Die Polymerisate b) enthalten im allgemeinen 2 bis 14, vorzugsweise 4 bis 10 Gew.-% NCO-Gruppen. Das mittlere Molekulargewicht $\bar{M}w$ liegt im allgemeinen unterhalb 100 000, vorzugsweise bei 5 000 bis 20 000.

Im dritten Reaktionsschritt c) wird das isocyanatgruppenhaltige Polymerisat z. B. in einem mit Wasser mischbaren, inerten Lösungsmittel, vorzugsweise solchen mit einem Siedepunkt von über 100 °C, z. B. Dioxan, Äthylenglykoldimethyläther oder Diäthylenglykoldimethyläther, gelöst und langsam in eine mineralsaure Lösung, z. B. konz. Salzsäure oder verdünnte, z. B. 10 bis 50 %ige Schwefelsäure gegeben. Das Äquivalentverhältnis von NCO-Gruppen zu $Cl^{(-)}$- oder $SO_4^{2(-)}$-Ionen beträgt im allgemeinen 1 : (1,01 bis 1,5) vorzugsweise (1,1 bis 1,2). Die Zugabe des Polymerisats erfolgt im allgemeinen im Temperaturbereich von 10 °C bis 100 °C, vorzugsweise zwischen 20 °C und 60 °C. Nach Beendigung der Zugabe wird solange weitergerührt, bis die Kohlendioxidentwicklung praktisch beendet ist. Das Reaktionsgemisch wird anschließend durch Basenzusätz, z. B. mit Calciumoxyd, -hydroxyd, Bariumoxyd, -hydroxyd, vorzugsweise aber mit NaOH oder KOH neutralisiert. Im allgemeinen wird das Wasser zuerst aus dem Reaktionsgemisch abdestilliert, und dann werden die Salzanteile entfernt, z. B. durch Druckfiltration. Die aminogruppenhaltigen Acrylatharze können vom Lösungsmittel z. B. durch

eine Destillation, abgetrennt werden ; für viele Anwendungen können jedoch direkt die Lösungen, die z. B. nach der Druckfiltration erhalten werden, eingesetzt werden. Es ist in vielen Fällen ebenfalls möglich, die aminogruppenhaltigen Polymerisate mit Wasser aus der Reaktionsmischung auszufallen ; das Polymerisat wird dann z. B. durch Filtration isoliert und getrocknet.

Die Polymerisate enthalten im allgemeinen 0,7 bis 5,8, vorzugsweise 1,4-3,5 Gew.-% $NH_2$-Aminogruppen.

Die erfindungsgemäßen Polymerisate können zusammen mit anderen polyfunktionellen Verbindungen bei der Herstellung von 2-Komponentenlacken eingesetzt werden. Geeignete polyfunktionelle Verbindungen sind Polyisocyanate, z. B. die oben genannten, ferner isocyanatgruppenhaltige Acrylatharze oder NCO-Präpolymere aus Polyolen und Polyisocyanaten oder Urethan- und/oder Biuretgruppen enthaltende Polyisocyanate. Bevorzugt ist ein Biuretgruppen enthaltendes Polyisocyanat, das aus 3 Molen Hexamethylendiisocyanat und einem Mol Wasser entsteht. Geeignete polyfunktionelle Verbindungen sind ebenfalls Phenolharze oder Polyepoxide.

Weiterhin können die erfindungsgemäßen aminogruppenhaltigen Polymerisate für alle anderen an sich bekannten Reaktionen von Aminen, wie Amid- oder Imidbildung, bei Umsetzungen mit Polycarbonsäuren usw. eingesetzt werden.

In den Beispielen bedeutet, wenn nicht anders vermerkt, % stets Gew.-%.

## Beispiele

1a) In eine Lösung von 888 g Isophorondiisocyanat und 0,3 g Dibutylzinndilaurat in 592 g Diäthylenglykoldimethyläther wurde innerhalb von 8 Stunden bei 20 °C eine Lösung von 520 g Hydroxyäthylmethacrylat in 346 g Diäthylenglykoldimethyläther gegeben. Nach weiteren 8 Stunden besaß die Reaktionslösung einen Isocyanatgehalt von 7,2 Gew.-% (theor. 7,2 Gew.-%).

1b) 78,3 g der Lösung nach Beispiel 1a) wurden zusammen mit 1,5 g dimerem α-Methylstyrol unter Rühren bei 115 °C innerhalb von 7 Stunden gleichmäßig in 18,7 g Diäthylenglykoldimethyläther getropft ; anschließend wurde 1 Stunde bei dieser Temperatur unter Rühren zu Ende polymerisiert. Der Isocyanatgehalt der 50 %igen Polymerisatlösung betrug 5,4 Gew.-% (theor. 5,6 Gew.-%).

1c) 100 g der Lösung der isocyanatgruppenhaltigen Polymerisats 1b) wurden bei 50 °C langsam in 190 g konzentrierte Salzsäure getropft, wobei stürmische $CO_2$-Entwicklung einsetzte. Nachdem kein $CO_2$ mehr entwich, wurde mit methanolischem Kaliumhydroxyd neutralisiert und anschließend durch Druckfiltration vom ausgefallenen Salz abgetrennt. Das Filtrat wurde unter vermindertem Druck von Wasser und Methanol befreit und nochmals einer Druckfiltration unterworfen. Es resultierte eine hellgelbe Lösung, die 4,56 Gew.-% $NH_2$ (theor. 4,71 Gew.-%), bezogen auf Festharz, enthielt.

2a) 24,5 g der nach Beispiel 1a) hergestellten Lösung wurden unter Rühren zusammen mit 1,5 g t-Butylperoctoat, 32,2 g Styrol und 1,5 g dimeren α-Methylstyrol innerhalb von 6 Stunden bei 115 °C gleichmäßig in 40,2 g Diäthylenglykoldimethyläther getropft ; anschließend wurde 4 Stunden bei dieser Temperatur unter ständigem Rühren zu Ende polymerisiert. Der Isocyanatgehalt der 50 %ige Polymerisatlösung betrug 1,6 Gew.-% (theor. 1,7 Gew.-%).

2b) 1 100 g der Lösung des isocyanatgruppenhaltigen Polymerisats 2a) wurden bei 50 °C langsam in 68 g konzentrierte Salzsäure getropft und wie in Beispiel 1c) behandelt. Man erhielt eine hellgelbe Lösung mit einem $NH_2$-Gehalt von 1,31 Gew.-% (theor. 1,30 Gew.-%), bezogen auf Festharz.

3a) 34,4 g der nach Beispiel 1a) hergestellten Lösung wurden unter Rühren zusammen mit 1,5 g t-Butylperoctoat, 26,3 g Methylmethacrylat und 1,5 g dimerem α-Methylstyrol innerhalb von 6 Stunden bei 115 °C gleichmäßig in 34,4 g Diäthylenglykoldimethyläther gegeben ; anschließend wurde 1 Stunde bei dieser Temperatur unter Rühren zu Ende polymeriziert. Der Isocyanatgehalt der 50 %igen Polymerisatlösung betrug 2,2 Gew.-% (theor. 2,46 Gew.-%).

3b) 1 100 g der Polymerisatlösung 3a) wurden bei 50 °C langsam in 97 g konz. Salzsäure getropft, wobei stürmische $CO_2$-Entwicklung einsetzte. Nachdem die $CO_2$-Entwicklung beendet war, wurde mit methanolischem Kaliumhydroxyd neutralisiert und das Polymerisat in Wasser ausgefällt. Nach Druckfiltration und Trocknung unter vermindertem Druck erhielt man 504 g (94,2 % der Theorie) eines weißen Pulvers mit einem $NH_2$-Gehalt von 1,65 Gew.-% (theor. 1,84 Gew.-%).

4a) 44,0 g der nach Beispiel 1a) hergestellten Reaktionslösung wurden unter Rühren zusammen mit 10,3 g Styrol, 10,3 g Methylmethacrylat, 1,5 g t-Butylperoctoat und 1,5 g dimerem α-Methylstyrol innerhalb von 6 Stunden bei 125 °C in 32,3 g Diäthylenglykoldimethyläther gegeben ; anschließend wurde 3 Stunden bei dieser Temperatur unter Rühren nachpolymerisiert. Der Isocyanatgehalt der 50 %igen Polymerisatlösung betrug 2,85 Gew.-% (theor. 3,15 Gew.-%).

4b) 1 100 g der Polymerisatlösung 4a) wurden bei 50 °C langsam in 122 g konz. Salzsäure getropft; es setzt eine stürmische $CO_2$-Entwicklung ein. Nach beendeter $CO_2$-Entwicklung wurde mit methanolischem Kaliumhydroxyd neutralisiert und anschließend durch Druckfiltration vom ausgefallenen Salz abgetrennt. Das Filtrat wurde unter vermindertem Druck von Wasser und Methanol befreit und nochmals einer Druckfiltration unterworfen. Man erhielt eine hellgelbe Lösung mit einem $NH_2$-Gehalt von 2,34 Gew.-% (theor. 2,25 Gew.-%), bezogen auf Festharz.

**Patentansprüche** (für die Vertragsstaaten : BE, CH, DE, FR, GB, IT, LI, NL, SE)

1. Polymerisate mit endständigen Aminogruppen, die Einheiten der Formel (I)

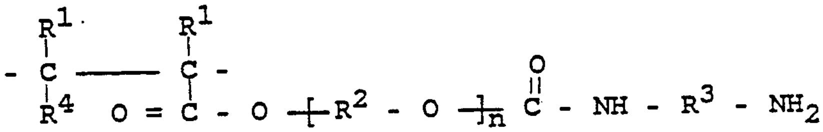

(I)

enthalten, in der bedeuten

$R^1$ Wasserstoff oder Methyl,

$R^2$ einen aliphatischen Rest mit 2 bis 10 C-Atomen, der bis zu zwei Sauerstoff-Ätherbrücken in der Kette enthalten kann,

$R^3$ einen aliphatischen Rest mit 3 bis 19 C-Atomen, einen cycloaliphatischen Rest mit 4 bis 15 C-Atomen oder einen aromatischen Rest mit 6 bis 13 C-Atomen,

$R^4$ Wasserstoff, Carboxyl, oder den Rest

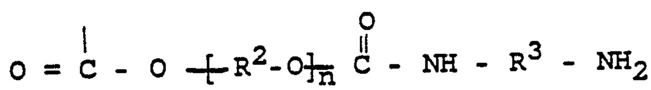

(II)

und

n = 1 bis 10,

wobei die beiden $R^1$ gleich oder verschieden sind.

2. Copolymerisate nach Anspruch 1, dadurch gekennzeichnet, daß sie 0,7 bis 5,8 Gew.-% $NH_2$-Aminogruppen enthalten.

3. Polymerisate nach Anspruch 1 oder 2, dadurch gekennzeichnet, daß sie zusätzlich zu den Einheiten der Formel (I) noch Einheiten enthalten, die sich von olefinisch ungesättigten, polymerisierbaren Monomeren aus der Gruppe α-Olefine, vinylaromatische Kohlenwasserstoffe, Ester von α-β-ungesättigten Carbonsäuren mit einwertigen aliphatischen Alkoholen ableiten.

4. Verfahren zur Herstellung der Copolymerisate gemäß Anspruch 1 durch Hydrolyse von Isocyanaten, indem man

a) in einem ersten Schritt einen hydroxylgruppenhaltigen Ester aus einer α-β-olefinisch ungesättigten Mono- oder Dicarbonsäure und einem zweiwertigen Alkohol mit einem Diisocyanat umsetzt in einem Äquivalentverhältnis von NCO- zu OH-Gruppen von größer als 1 : 1,

b) das Umsetzungsprodukt für sich oder im Gemisch mit mindestens einem olefinisch ungesättigten, polymerisierbaren Monomeren radikalisch polymerisiert,

c) das Polymerisat mit überschüssiger Mineralsäure und Wasser unter Abspaltung von Kohlendioxid in das Ammoniumsalz überführt und anschließend durch Basenzusatz neutralisiert.

5. Verfahren nach Anspruch 4, dadurch gekennzeichnet, daß das Äquivalenzverhältnis von NCO- zu OH-Gruppen in Reaktionsschritt a) 1,5-2,5 : 1 ist.

6. Verfahren nach Anspruch 4 oder 5, dadurch gekennzeichnet, daß die Reaktion a) in Gegenwart eines Katalysators aus der Gruppe der Amine oder von Zinnverbindungen durchgeführt wird, wobei die Zinnverbindungen in einer Menge von 0,001 bis 0,01 Gew.-% Zinn und die Amine in einer Menge von 0,1 bis 1 Gew.-%, jeweils bezogen auf die Menge der eingesetzten Ester und Diisocyanate, eingesetzt werden.

7. Verfahren nach einem oder mehreren der Ansprüche 4 bis 6, dadurch gekennzeichnet, daß die Reaktion a) bei 0 bis 90 °C, die radikalische Polymerisation b) als Masse- oder Lösungsmittelpolymerisation in Gegenwart eines Polymerisationsinitiators bei 70-180 °C durchgeführt wird und als Säure im Schritt c) konz. Salzsäure oder verdünnte Schwefelsäure eingesetzt wird, wobei das Äquivalentverhältnis von NCO-Gruppen des Polymerisates b) zu den Ionen der Säuren 1 : (1,01-1,5) beträgt und die Umsetzungstemperatur im Bereich von 10 bis 100 °C liegt.

8. Verfahren nach einem oder mehreren der Ansprüche 4 bis 7, dadurch gekennzeichnet, daß im Polymerisationsschritt b) ein Produkt mit 2 bis 14 Gew.-% NCO-Gruppen mit einem mittleren Molekulargewicht $\bar{M}w$ von unterhalb 100 000 hergestellt wird.

9. Ausführungsform nach einem oder mehreren der Ansprüche 1 bis 8, dadurch gekennzeichnet, daß 2,4-Toluylendiisocyanat oder Isophorondiisocyanat eingesetzt wird, so daß sich $R^3$ von 2,4-Toluylen bzw. Isophoron ableitet.

10. Verwendung von Polymerisaten nach einem oder mehreren der Ansprüche 1 bis 3 zusammen mit polyfunktionellen Verbindungen zur Herstellung von Zweikomponentenlacken.

**Patentansprüche** (für den Vertragsstaat AT)

1. Verfahren zur Herstellung von Copolymerisaten mit endständigen Aminogruppen, die Einheiten der Formel (I)

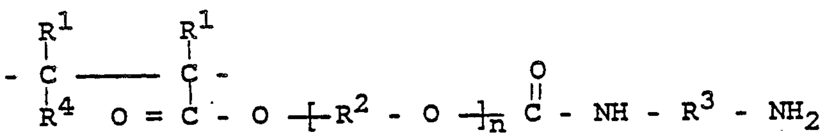

(I)

enthalten, in der bedeuten

$R^1$ Wasserstoff oder Methyl,

$R^2$ einen aliphatischen Rest mit 2 bis 10 C-Atomen, der bis zu zwei Sauerstoff-Ätherbrücken in der Kette enthalten kann,

$R^3$ einen aliphatischen Rest mit 3 bis 19 C-Atomen, einen cycloaliphatischen Rest mit 4 bis 15 C-Atomen oder einen aromatischen Rest mit 6 bis 13 C-Atomen,

$R^4$ Wasserstoff, Carboxyl, oder den Rest

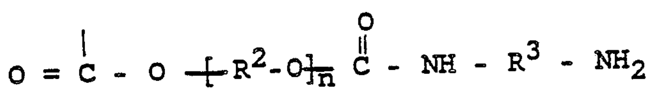

(II)

und

n = 1 bis 10,

wobei die beiden $R^1$ gleich oder verschieden sind, durch Hydrolyse von Isocyanaten, indem man

a) in einem ersten Schritt einen hydroxylgruppenhaltigen Ester aus einer α,β-olefinisch ungesättigten Mono- oder Dicarbonsäure und einem zweiwertigen Alkohol mit einem Diisocyanat umsetzt in einem Äquivalentverhältnis von NCO- zu OH-Gruppen von größer als 1 : 1,

b) das Umsetzungsprodukt für sich oder im Gemisch mit olefinisch ungesättigten, polymerisierbaren Monomeren radikalisch polymerisiert,

c) das Polymerisat mit überschüssiger Mineralsäure und Wasser unter Abspaltung von Kohlendioxid in das Ammoniumsalz überführt und anschließend durch Basenzusatz neutralisiert.

2. Verfahren nach Anspruch 1, dadurch gekennzeichnet, daß das Äquivalenzverhältnis von NCO- zu OH-Gruppen in Reaktionsschritt a) 1,5-2,5 : 1 ist.

3. Verfahren nach Anspruch 1 oder 2, dadurch gekennzeichnet, daß die Reaktion a) in Gegenwart eines Katalysators aus der Gruppe der Amine oder von Zinnverbindungen durchgeführt wird, wobei die Zinnverbindungen in einer Menge von 0,001 bis 0,01 Gew.-% Zinn und die Amine in einer Menge von 0,1 bis 1 Gew.-%, jeweils bezogen auf die Menge der eingesetzten Ester und Diisocyanate, eingesetzt werden.

4. Verfahren nach einem oder mehreren der Ansprüche 1 bis 3, dadurch gekennzeichnet, daß die Reaktion a) bei 0 bis 90 °C, die radikalische Polymerisation b) als Masse- oder Lösungsmittelpolymerisation in Gegenwart eines Polymerisationsinitiators bei 70-180 °C durchgeführt wird und als Säure im Schritt c) konz. Salzsäure oder verdünnte Schwefelsäure eingesetzt wird, wobei das Äquivalentverhältnis von NCO-Gruppen des Polymerisates b) zu den Ionen der Säuren 1 : (1,01-1,5) beträgt und die Umsetzungstemperatur im Bereich von 10 bis 100 °C liegt.

5. Verfahren nach einem oder mehreren der Ansprüche 1 bis 4, dadurch gekennzeichnet, daß im Polymerisationsschritt b) ein Produkt mit 2 bis 14 Gew.-% NCO-Gruppen mit einem mittleren Molekulargewicht $\bar{M}w$ von unterhalb 100 000 hergestellt wird.

6. Verfahren nach einem oder mehreren der Ansprüche 1 bis 5, dadurch gekennzeichnet, daß 2,4-Toluylendiisocyanat oder Isophorondiisocyanat eingesetzt wird, so daß sich $R^3$ von 2,4-Toluylen bzw. Isophoron ableitet.

7. Verfahren nach einem oder mehreren der Ansprüche 1 bis 6, dadurch gekennzeichnet, daß im Schritt c) ein Produkt hergestellt wird, das 0,7 bis 5,8 Gew.-% $NH_2$-Aminogruppen enthält.

8. Verwendung von Polymerisaten hergestellt nach einem oder mehreren der Ansprüche 1 bis 7 zusammen mit polyfunktionellen Verbindungen zur Herstellung von Zweikomponentenlacken.

**Claims** (for the Contracting States : BE, CH, DE, FR, GB, IT, LI, NL, SE)

1. A polymer which contains terminal amino groups and units of the formula (I)

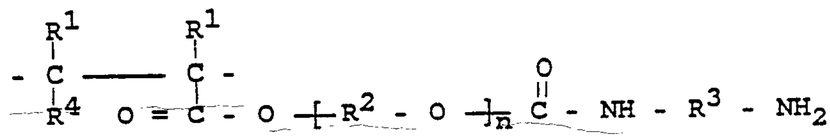

(I)

in which

$R^1$ is hydrogen or methyl,

$R^2$ is an aliphatic radical which has 2 to 10 carbon atoms and can contain up to two oxygen ether bridges in the chain,

$R^3$ is an aliphatic radical having 3 to 19 carbon atoms, a cycloaliphatic radical having 4 to 15 carbon atoms or an aromatic radical having 6 to 13 carbon atoms,

$R^4$ is hydrogen, carboxyl of the radical

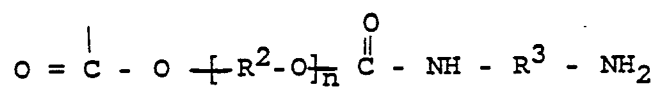

(II)

and

n = 1 to 10,

the two $R^1$s being identical or different.

2. A copolymer as claimed in claim 1, which contains 0.7 to 5.8 % by weight of $NH_2$ amino groups.

3. A polymer as claimed in claim 1 or 2, which in addition to the units of the formula (I) also contain units which derive from olefinically unsaturated polymerizable monomers from the group comprising α-olefins, vinylaromatic hydrocarbons and esters of α,β-unsaturated carboxylic acids with monohydric aliphatic alcohols.

4. A process for preparing a copolymer as claimed in claim 1 through hydrolysis of isocyanates by

a) in a first step reacting a hydroxyl-containing ester of an α,β-olefinically unsaturated monocarboxylic or dicarboxylic acid and a dihydric alcohol with a diisocyanate, the equivalence ratio of NCO to OH groups being greater than 1 : 1,

b) subjecting the reaction product to a free-radical polymerization by itself or mixed with at least one olefinically unsaturated polymerizable monomer,

c) decarboxylating the polymer by means of excess mineral acid and water into the ammonium salt, and then neutralizing the resulting product by adding base.

5. The process as claimed in claim 4, wherein the equivalence ratio of NCO to OH groups in reaction step a) is 1.5-2.5 : 1.

6. The process as claimed in claim 4 or 5, wherein the reaction a) is carried out in the presence of a catalyst from the group of the amines or tin compounds, the tin compounds being used in an amount of 0.001 to 0.01 % by weight of tin and the amines in an amount of 0.1 to 1 % by weight, in each case relative to the amount of esters and diisocyanates used.

7. The process as claimed in one or more of claims 4 to 6, wherein the reaction a) is carried out at 0 to 90 °C, the free-radical polymerization b) is carried out at 70-180 °C as a mass or solvent polymerization in the presence of a polymerization initiator, and the acid used in step c) is concentrated hydrochloric acid or dilute sulfuric acid, the equivalence ratio of NCO groups of the polymer b) to the ions of the acids being 1 : (1.01-1.5), and the reaction temperature being within the range from 10 to 100 °C.

8. The process as claimed in one or more of claims 4 to 7, wherein the product prepared in polymerization step b) contains 2 to 14 % by weight of NCO groups and has an average molecular weight $\bar{M}w$ of below 100,000.

9. The embodiment as claimed in one or more of claims 1 to 8, wherein 2,4-toluylene diisocyanate or isophorone diisocyanate is used, so that $R^3$ derives from, 2,4-toluylene or isophorone.

10. Use of the polymer as claimed in one or more of claims 1 to 3 together with polyfunctional compounds, for preparing two-component finishes.

**Claims** (for the Contracting State AT)

1. A process for preparing a copolymer which contains terminal amino groups and units of the formula (I)

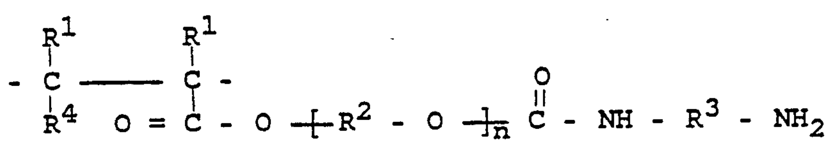

(I)

in which

$R^1$ is hydrogen or methyl,

$R^2$ is an aliphatic radical which has 2 to 10 carbon atoms and can contain up to two oxygen ether bridges in the chain,

$R^3$ is an aliphatic radical having 3 to 19 carbon atoms, ~~a cycloaliphatic radical having 4 to 15 carbon atoms or an aromatic radical having 6 to 13 carbon atoms,~~

$R^4$ is hydrogen, carboxyl or the radical

$$\begin{array}{c} | \\ O = C \end{array} - O - \left[ R^2 - O \right]_n - \overset{O}{\overset{\|}{C}} - NH - R^3 - NH_2 \qquad (II)$$

and

n = 1 to 10,

the two $R^1$s being identical or different through hydrolysis of isocyanates by

a) in a first step reacting a hydroxyl-containing ester of an α,β-olefinically unsaturated monocarboxylic or dicarboxylic acid and a dihydric alcohol with a diisocyanate, the equivalence ratio of NCO to OH groups being greater than 1 : 1,

b) subjecting the reaction product to a free-radical polymerization by itself or mixed with olefinically unsaturated polymerizable monomers,

c) decarboxylating the polymer by means of excess mineral acid and water into the ammonium salt, and then neutralizing the resulting product by adding base.

2. The process as claimed in claim 1, wherein the equivalence ratio of NCO to OH groups in reaction step a) is 1.5-2.5 : 1.

3. The process as claimed in claim 1 or 2, wherein the reaction a) is carried out in the presence of catalyst from the group of the amines or tin compounds, the tin compounds being used in an amount of 0.001 to 0.01 % by weight of tin and the amines in an amount of 0.1 to 1 % by weight, in each case relative to the amount of esters and diisocyanates used.

4. The process as claimed in one or more of claims 1 to 3 wherein the reaction a) is carried out at 0 to 90 °C, the free-radical polymerization b) is carried out at 70-180 °C as a mass or solvent polymerization in the presence of a polymerization initiator, and the acid used in step c) is concentrated hydrochloric acid or dilute sulfuric acid, the equivalence ratio of NCO groups of the polymer b) to the ions of the acids being 1 : (1.01-1.5), and the reaction temperature being within the range from 10 to 100 °C.

5. The process as claimed in one or more of claims 1 to 4, wherein the product prepared in polymerization step b) contains 2 to 14 % by weight of NCO groups and has an average molecular weight $\bar{M}w$ of below 100,000.

6. The process as claimed in one or more of claims 1 to 5, wherein 2,4-toluylene diisocyanate or isophorone diisocyanate is used, so that $R^3$ derives from 2,4-toluylene or isophorone.

7. The process as claimed in one or more of claims 1 to 6, wherein the product prepared in step c) which contains 0.7 to 5.8 % by weight of $NH_2$ amino groups.

8. Use of the polymer prepared as claimed in one or more of claims 1 to 7 together with polyfunctional compounds, for preparing two-component finishes.

**Revendications** (pour les Etats contractants : BE, CH, DE, FR, GB, IT, LI, NL, SE)

1. Polymères à radicaux amino terminaux qui contiennent des motifs répondant à la formule I :

$$\begin{array}{ccc} R^1 & & R^1 \\ | & & | \\ - C & \text{———} & C - \\ | & & | \\ R^4 & & O = C - O - \left[ R^2 - O \right]_n - \overset{O}{\overset{\|}{C}} - NH - R^3 - NH_2 \end{array} \qquad (I)$$

dans laquelle

les deux $R^1$, qui peuvent être identiques ou différents, représentent chacun l'hydrogène ou un radical méthyle,

$R^2$ représente un radical aliphatique contentant de 2 à 10 atomes de carbone, radical dont la chaîne peut être interrompue par au plus deux atomes d'oxygène de fonction éther,

$R^3$ représente un radical aliphatique contenant de 3 à 19 atomes de carbone, un radical cycloaliphatique contenant de 4 à 15 atomes de carbone ou un radical aromatique contenant de 6 à 13 atomes de carbone,

$R^4$ représente l'hydrogène, un radical carboxy ou un radical de formule II :

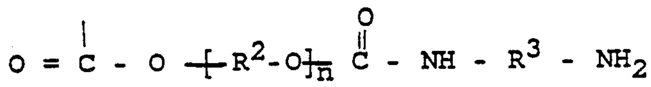 (II)

et

n désigne un nombre de 1 à 10,

2. Copolymères selon la revendication 1 caractérisés en ce qu'ils contiennent de 0,7 à 5,8 % en poids de radicaux amino $-NH_2$.

3. Polymères selon l'une des revendications 1 et 2, caractérisés en ce qu'en plus des motifs de formule I ils contiennent des motifs dérivant de monomères éthyléniques polymérisables pris dans l'ensemble constitué par les α-oléfines, les hydrocarbures vinyl-aromatiques et les esters formés par les acides carboxyliques insaturés en α,β et les mono-alcools aliphatiques.

4. Procédé de préparation des copolymères selon la revendication 1, par hydrolyse isocyanates, procédé selon lequel :

a) dans une première étape on fait réagir avec un di-isocyanate un ester hydroxylé dérivant d'un acide mono- ou di-carboxylique α,β-éthylénique et d'un diol, le rapport en équivalents des radicaux -NCO aux radicaux -OH étant supérieur à 1 : 1,

b) on polymérise par voie radicalaire le produit de réaction isolément ou en mélange avec au moins un monomère éthylénique polymérisable,

c) on transforme le polymère au moyen d'un excès d'un acide minéral et d'eau, par enlèvement de dioxyde de carbone, en le sel d'ammonium, et on neutralise ensuite le produit obtenu par addition d'une base.

5. Procédé selon la revendication 4 caractérisé en ce que le rapport en équivalents des radicaux -NCO aux radicaux OH dans l'étape réactionnelle a) est compris entre 1,5 : 1 et 2,5 : 1.

6. Procédé selon l'une des revendications 4 et 5, caractérisé en ce que la réaction a) est exécutée en présence d'un catalyseur pris dans l'ensemble constitué par les amines et les composés de l'étain, les composés de l'étain étant mis en jeu en une quantité comprise entre 0,001 et 0,01 % en poids en étain et les amines en une quantité comprise entre 0,1 et 1 % en poids, à chaque fois par rapport à la quantité des esters et des di-isocyanates mis en jeu.

7. Procédé selon l'une quelconque des revendications 4 à 6, caractérisé en ce que, dans l'étape a), on effectue la réaction à une température comprise entre 0 et 90 °C, dans l'étape b) on effectue la polymérisation radicalaire sous la forme d'une polymérisation en masse ou d'une polymérisation dans un solvant, en présence d'un amorçeur de polymérisation et à une température comprise entre 70 et 180 °C, et, dans l'étape c), on utilise comme acide un acide chlorhydrique concentré ou un acide sulfurique dilué, le rapport en équivalents des radicaux NCO du polymère b) aux ions des acides étant compris entre 1 : 1,01 et 1 : 1,5 et la température réactionnelle étant située dans l'intervalle allant de 10 à 100 °C.

8. Procédé selon l'une quelconque des revendications 4 à 7, caractérisé en ce que, dans l'étape de polymérisation b), on prépare un produit qui contient de 2 à 14 % en poids de radicaux -NCO et qui a une masse moléculaire moyenne $\bar{M}_p$ inférieure à 100 000.

9. Forme d'exécution selon l'une quelconque des revendications 1 à 8, caractérisée en ce qu'on utilise le di-isocyanato-2,4 toluène ou la di-isocyanato-isophorone de telle sorte que $R^3$ est le radical toluylène-2,4 ou le radical de l'isophorone.

10. Application de polymères selon l'une quelconque des revendications 1 à 3, avec des composés polyfonctionnels, pour la préparation de peintures et vernis à deux composantes.

**Revendications** (pour l'Etat contractant AT)

1. Procédé pour préparer des copolymères à radicaux amino terminaux qui contiennent des motifs répondant à la formule I :

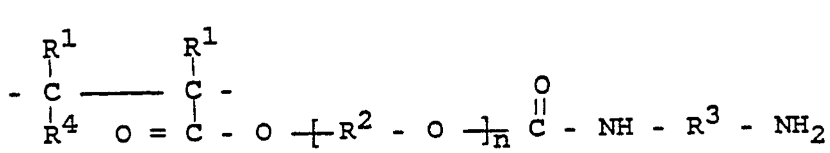 (I)

dans laquelle

les deux $R^1$, qui peuvent être identiques ou différents, représentent chacun l'hydrogène ou un radical méthyle,

$R^2$ représente un radical aliphatique contenant de 2 à 10 atomes de carbone, radical dont la chaîne peut être interrompue par au plus deux atomes d'oxygène de fonction éther,

$R^3$ représente un radical aliphatique contenant de 3 à 19 atomes de carbone, un radical cycloaliphatique contenant de 4 à 15 atomes de carbone ou un radical aromatique contenant de 6 à 13 atomes de carbone,

$R^4$ représente l'hydrogène, un radical carboxy ou un radical de formule II :

$$O = \overset{|}{C} - O - [R^2-O]_n - \overset{O}{\overset{\|}{C}} - NH - R^3 - NH_2 \quad (II)$$

et

n désigne un nombre de 1 à 10,

par hydrolyse d'isocyanates, procédé selon lequel :

a) dans une première étape on fait réagir avec un di-isocyanate un ester hydroxylé dérivant d'un acide mono-ou di-carboxylique $\alpha,\beta$-éthylénique et d'un diol, le rapport en équivalents des radicaux -NCO aux radicaux -OH étant supérieur à 1 : 1,

b) on polymérise par voie radicalaire le produit de réaction isolément ou en mélange avec au moins un monomère éthylénique polymérisable,

c) on transforme le polymère au moyen d'un excès d'un acide minéral ou d'eau, par enlèvement de dioxyde de carbone, en le sel d'ammonium, et on neutralise ensuite le produit obtenu par addition d'une base.

2. Procédé selon la revendication 1 caractérisé en ce que le rapport, en équivalents, des radicaux -NCO aux radicaux -OH, dans l'étape réactionnelle a) est compris entre 1,5 : 1 et 2,5 : 1.

3. Procédé selon l'une des revendications 1 et 2, caractérisé en ce que la réaction a) est exécutée en présence d'un catalyseur pris dans l'ensemble constitué par les amines et les composés de l'étain, les composés de l'étain étant mis en jeu en une quantité comprise entre 0,001 et 0,01 % en poids en étain et les amines en une quantité comprise entre 0,1 et 1 % en poids, à chaque fois par rapport à la quantité des esters et des di-isocyanates mis en jeu.

4. Procédé selon l'une quelconque des revendications 1 à 3, caractérisé en ce que, dans l'étape a), on effectue la réaction à une température comprise entre 0 et 90 °C, dans l'étape b) on effectue la polymérisation radicalaire sous la forme d'une polymérisation en masse ou d'une polymérisation dans un solvant, en présence d'un amorçeur de polymérisation et à une température comprise entre 70 et 180 °C, et dans l'étape c), on utilise comme acide un acide chlorhydrique concentré ou un acide sulfurique dilué, le rapport en équivalents des radicaux NCO du polymère b) aux ions des acides étant compris entre 1 : 1,01 et 1 : 1,5 et la température réactionnelle étant située dans l'intervalle allant de 10 à 100 °C.

5. Procédé selon l'une quelconque des revendications 1 à 4, caractérisé en ce que, dans l'étape de polymérisation b), on prépare un produit qui contient de 2 à 14 % en poids de radicaux -NCO et qui a une masse moléculaire moyenne $\bar{M}_p$ inférieure à 100 000.

6. Procédé selon l'une quelconque des renvendications 1 à 5, caractérisé en ce qu'on utilise le di-isocyanato-2,4 toluène ou la di-isocyanatoisophorone de telle sorte que $R^3$ est le radical toluylène-2,4 ou le radical de l'isophorone.

7. Procédé selon l'une quelconque des revendications 1 à 6, caractérisé en ce que, dans l'étape c), on prépare un produit qui contient de 0,7 à 5,8 % en poids de radicaux amino $-NH_2$.

8. Application de polymères qui ont été préparés selon l'une quelconque des revendications 1 à 7, avec des composés polyfonctionnels, à la préparation de peintures et de vernis à deux composantes.